# FASCICULE DE BREVET EUROPEEN

(11) **EP 2 084 509 B1**
(45) Date de publication et mention de la délivrance du brevet: **23.11.2011**
(21) Numéro de dépôt: 07858647.6
(22) Date de dépôt: 23.10.2007
(51) Int. Cl.: G01N 3/42

(54) **APPAREIL INDENTEUR A POINTE PROPRE A TESTER UN BLOC DE MATERIAU**
SPITZENEINKERBEVORRICHTUNG ZUM TESTEN EINES MATERIALBLOCKS
TIP INDENTING APPARATUS FOR TESTING A BLOCK OF MATERIAL

(30) Priorité: 25.10.2006 FR 0609380
(43) Date de publication de la demande: 05.08.2009
(73) Titulaire: ONERA (Office National d'Etudes et de Recherches Aérospatiales), 92320 Châtillon (FR)
(72) Inventeur: PASSILLY, Bruno, 92350 Le Plessis Robinson (FR); BEJET, Michel, 91940 Les Ulis (FR)
(74) Mandataire: Cabinet Plasseraud
(86) Numéro de dépôt international: PCT/FR2007/052227
(87) Numéro de publication internationale: WO 2008/050057

(56) Documents cités:
- WO-A-91/12513
- US-A- 2 375 033
- US-A- 3 191 424

## Description

La présente invention porte sur un appareil indenteur à pointe propre à tester un bloc de matériau.

L'invention a plus particulièrement comme domaine d'application un appareil indenteur propre à poinçonner ou rayer un matériau avec une force de pression ou d'impact donnée à l'aide d'une pointe, par exemple de type Vickers, Berkovitch, Knoop ou sphérique, et, par la suite, propre à mesurer les dimensions et le volume de la trace laissée sur le matériau à tester suite à la force de pression ou d'impact que ce matériau a subi. Il est ainsi possible de déterminer les propriétés mécaniques du matériau, telle que sa dureté, son module d'élasticité, à partir de la forme et de la profondeur de l'empreinte laissée dans le matériau et de la courbe (force exercée, profondeur) obtenue lors de l'essai.

Les matériaux à tester ainsi que la pointe sont des éléments ayant des dimensions pouvant être relativement réduites. Il est donc nécessaire de prévoir des dispositifs de support adaptés à de telles dimensions.

Il est connu dans l'art antérieur des appareils indenteurs à pointé propre à tester un bloc de matériau (US 3 191 424, US 3 221 535, US 6 361 641).

Toutefois, ces appareils ne sont pas adaptés pour une indentation à très haute température avec des forces d'impact très faibles, en vue de déterminer le comportement à très haute température de matériaux. Il est entendu par très haute température des températures supérieures à 700°C et pouvant atteindre jusqu'à 1200°C.

Il n'existe pas à l'heure actuelle d'appareils indenteurs permettant de déterminer le comportement d'un matériau, notamment à très haute température, devant subir un choc ou un impact.

A ces fins, la présente invention porte sur un appareil indenteur à pointe propre à tester un bloc de matériau, caractérisé en ce qu'il comporte un support de pointe agencé sous forme d'un dispositif de support et de chauffage, notamment à très haute température, et un support d'un bloc d'un matériau à poinçonner ou rayer agencé sous forme d'un dispositif de support et de chauffage, notamment à très haute température, ledit support de pointe et ledit support de bloc comportant chacun un corps massif en matériau thermiquement conducteur, possédant une paroi latérale périphérique et une face frontale ; des moyens de solidarisation prévus sur ladite face frontale pour solidariser de façon amovible soit la pointe, soit le bloc de matériau à poinçonner ou rayer, en contact de conduction thermique avec ledit corps massif ; un fourreau annulaire de forme complémentaire au corps massif dans lequel est logé ledit corps massif ; des moyens de chauffage de structure annulaire propres à entourer étroitement la paroi latérale du fourreau annulaire en étant en contact de conduction thermique avec celui-ci, lesdits moyens de chauffage comprenant au moins un organe de chauffage électrique, et des moyens d'assemblage du corps massif et des moyens de chauffage, ce grâce à quoi la pointe peut être, au cours du test, portée à une température déterminée, notamment à une température sensiblement égale à celle du bloc de matériau à tester.

En effet, afin de déterminer les propriétés mécaniques d'un matériau, il est couramment utilisé un appareil indenteur à pointe. Jusqu'à présent, si on souhaite connaître le comportement à une certaine température d'un matériau, sans toutefois atteindre de très hautes températures, on chauffe uniquement le matériau à tester. Pour des faibles efforts d'impact et pour de très hautes températures, le transfert thermique entre la pointe non chauffée et le matériau à tester chauffé est susceptible d'influencer la température réelle du matériau au moment de la mise en contact de la pointe avec le matériau, une partie de la chaleur du matériau à tester étant susceptible de se transférer vers la pointe entraînant de ce fait une diminution de la température réelle du matériau à tester. Il n'est donc pas possible de déterminer à l'heure actuelle le comportement mécanique donné d'un matériau à une température élevée à l'aide d'un essai à pointe. Ainsi, si on souhaite plus précisément obtenir les propriétés mécaniques du matériau à une température donnée et afin d'éviter des transferts thermiques, entre la pointe et le matériau à tester, susceptibles d'influencer sur la température du matériau à tester, on prévoit de chauffer aussi bien la pointe que le bloc de matériau à tester chacun à l'aide d'un dispositif de support et de chauffage. On ne connaît pas à l'heure actuelle de dispositifs de support et de chauffage à haute température d'une pointe et d'un bloc de matériau à tester qui soit indépendant.

Afin de permettre à la pointe ou au bloc de matériau d'être chauffé de manière sensiblement homogène et ainsi d'obtenir un objet chauffé présentant la même température en tout point donné, les moyens de chauffage comprennent un manchon tubulaire en matériau thermiquement conducteur entourant le fourreau annulaire et en contact de conduction thermique avec la paroi latérale périphérique de celui-ci, l'organe de chauffage électrique étant enroulé autour du manchon tubulaire. Toutefois, afin que l'objet soit à une même température en tout point donné par conduction thermique de la chaleur entre le manchon tubulaire, le fourreau annulaire et l'objet, les moyens de chauffage doivent être au préalable mis en route avant d'exercer une quelconque force de pression sur l'objet, ou inversement. Il est ainsi obtenu un état d'équilibre entre ces différents éléments et la pointe ou le bloc de matériau a, au bout d'un certain laps de temps, une température sensiblement uniforme et homogène.

De manière à permettre un contact de conduction thermique pouvant s'adapter facilement à toute forme possible du fourreau annulaire, l'organe de chauffage électrique est un fil métallique, notamment un fil en platine.

Afin que le manchon tubulaire soit chauffé de manière uniforme sur toute sa hauteur, le fil métallique est enroulé en hélice autour de la paroi externe du manchon tubulaire.

Afin de réaliser un contact de conduction thermique le plus étroit possible entre le manchon tubulaire et l'organe de chauffage électrique, au moins une gouttière est creusée dans la paroi externe du manchon tubulaire autour de celle-ci, l'organe de chauffage étant abrité dans cette gouttière.

De manière avantageuse, les moyens d'assemblage comprennent un cylindre entourant étroitement les moyens de chauffage et des moyens de retenue amovible de ce cylindre.

Afin de permettre le remplacement en un minimum de temps de l'organe de chauffage électrique ou du manchon tubulaire, les moyens de retenue amovible comprennent au moins une tige de serrage engagée dans au moins un passage traversant, notamment diamétralement, le corps massif, le fourreau annulaire, les moyens de chauffage et le cylindre.

Afin d'empêcher un quelconque déplacement de la pointe lors de l'impact de la pointe sur le matériau à tester, ce qui entraînerait une marge d'erreur quant à la force d'impact réellement fournie au bloc de matériau à tester, les moyens de solidarisation de la pointe comprennent : un évidement pratiqué dans la face frontale du corps massif ; un noyau de forme extérieure complémentaire de celle de l'évidement, le noyau comportant un passage traversant de forme complémentaire de celle de la pointe de manière que cette dernière soit reçue de façon ajustée dans ce passage avec son extrémité pointue en saillie hors de la face frontale du corps massif et sa base forcée en appui de conduction thermique contre le fond de l'évidement ; des moyens de blocage de la pointe dans le passage, et des moyens de blocage du noyau dans l'évidement.

Afin de faciliter et de renforcer l'effet de blocage de la pointe dans le noyau, le fond de l'évidement comporte un doigt axial intégral en saillie de diamètre au plus égal à celui du passage et la base de la pointe est forcée en appui de conduction thermique contre la face frontale du doigt. Ainsi, il est exercé une force de poussée contre le fond de la pointe ce qui a tendance à plaquer la pointe dans le passage et à faire sortir la pointe hors du passage. La position en saillie de la pointe hors du passage est alors renforcée.

Afin de permettre la fixation rapide du noyau sur le corps massif et afin de faciliter le remplacement d'une pointe par une autre, l'évidement est taraudé et le noyau est fileté et vissé dans l'évidement.

Afin de renforcer la solidarisation et l'inamovibilité de la pointe dans le passage du noyau, les moyens de blocage de la pointe dans le passage comprennent une matière pulvérulente à faible granulométrie déposée dans le passage entre la pointe et le noyau.

Afin de permettre une liaison inamovible entre le bloc de matériau à tester et le corps massif lorsque le matériau à tester subit un impact ou une force de pression, les moyens de solidarisation du bloc de matériau à poinçonner comprennent deux profilés en L inversé, disposés face à face en saillie sur la face frontale du corps massif, sous lesquels le bloc de matériau est inséré.

De manière avantageuse, la pointe est soit une pointe Vickers, soit une pointe Berkovitch, soit une pointe Knoop, soit une pointe sphérique.

Afin de mesurer les efforts exercés par la pointe sur le matériau à tester, le support de bloc de matériau à rayer ou à poinçonner repose sur un capteur d'effort.

Selon une forme de réalisation avantageuse, le support de bloc de matériau à rayer ou à poinçonner repose sur le capteur d'effort par l'intermédiaire de moyens de liaison sous la forme d'un élément tubulaire, préférentiellement en zircone.

Avantageusement, la déformation du capteur d'effort est mesurée en continu par un capteur de déplacement capacitif.

De manière avantageuse, le capteur d'effort repose sur une pièce refroidie.

Préférentiellement, l'élément tubulaire traverse une pièce refroidie.

Selon une réalisation particulière, le capteur d'effort est constitué d'un dispositif à pont de jauges.

De manière avantageuse, l'appareil indenteur comprend des moyens de visualisation du support de bloc de matériau à rayer ou à poinçonner, notamment aptes à suivre la dilatation dudit support de bloc de matériau lors de son chauffage.

Afin de renforcer le blocage du bloc de matériau à tester, le support de bloc de matériau à rayer comprend des moyens de vissage traversant axialement le corps massif et aptes à exercer une force de placage sur le bloc contre les moyens de solidarisation.

Avantageusement, le support de pointe est déplaçable verticalement à l'aide de moyens de déplacement.

De manière avantageuse, le support du bloc de matériau à tester est déplaçable horizontalement à l'aide de moyens de déplacement.

Selon une forme de réalisation avantageuse, les moyens de déplacement vertical du support de pointe comprennent une table de translation motorisée et un translateur piézoélectrique.

De manière avantageuse, le translateur piézoélectrique est lié à un capteur de déplacement, avantageusement un capteur de déplacement capacitif.

La présente invention porte également sur un procédé de mesure de l'effort exercé par une pointe sur un bloc de matériau à tester à l'aide d'un appareil indenteur selon l'une des revendications précédentes, caractérisé en ce qu'il comprend une étape de mesure du déplacement de la pointe dans le bloc de matériau et, dans le même temps, une étape de mesure de l'effort exercé par la pointe sur le bloc, la mesure de déplacement étant déterminée en retranchant la valeur mesurée par un premier capteur de déplacement compris dans les moyens de déplacement du support de pointe à la valeur mesurée par un second capteur de déplacement mesurant la déformation du capteur d'effort supportant le support du bloc de matériau à tester.

Avantageusement, il est formé une boucle d'asservissement en effort tant que la valeur calculée lors de l'étape de mesure n'atteint pas une valeur de consigne fixée.

Avantageusement, le procédé selon l'invention comprend également une étape de déplacement d'un translateur piézoélectrique compris dans les moyens de déplacement du support de pointe tant que la valeur calculée lors de l'étape de mesure n'a pas atteint la valeur de consigne fixée.

Avantageusement, la valeur du déplacement du translateur piézoélectrique correspond à un pourcentage de la différence entre la valeur de consigne fixée et la valeur déterminée lors de l'étape de mesure.

La présente invention va maintenant être décrite à l'aide d'exemples uniquement illustratifs et nullement limitatifs et à partir des illustrations suivantes, dans lesquelles :
- la figure 1 est une vue en coupe schématique d'un dispositif de support et de chauffage d'un bloc de matériau à tester d'un appareil indenteur selon l'invention ;
- la figure 2 est une vue en coupe schématique d'un dispositif de support et de chauffage d'une pointe d'un appareil indenteur selon l'invention, et
- la figure 3 est une vue schématique d'un appareil indenteur selon l'invention.

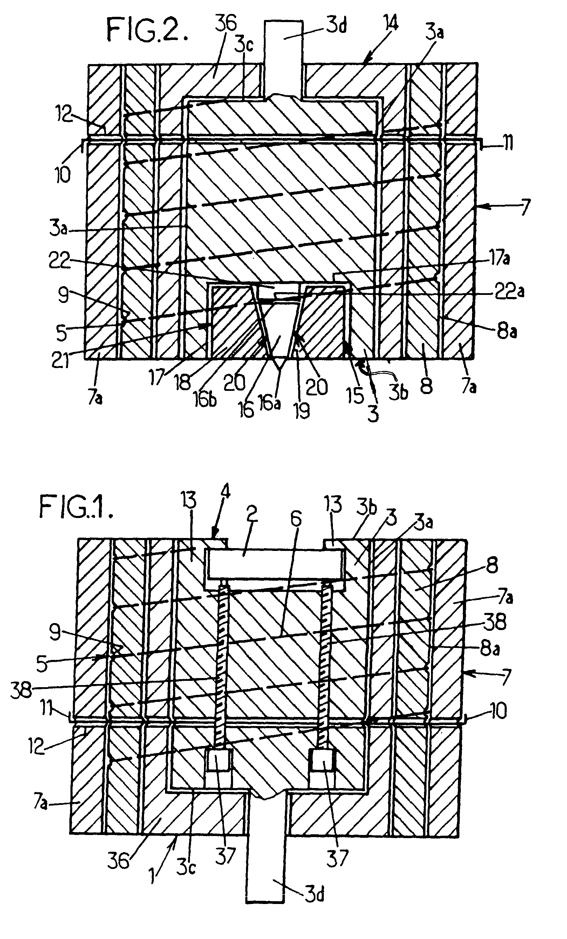

Les figures 1 et 2 représentent respectivement une vue en coupe schématique d'un dispositif de support et de chauffage d'un bloc 2 de matériau à tester et d'une pointe 16 d'un appareil indenteur 23 selon l'invention.

Plus précisément, la figure 1 illustre selon une vue en coupe schématique un dispositif 1 de support et de chauffage d'un bloc 2 de matériau à tester, le dispositif 1 appartenant à un appareil indenteur 23 selon l'invention comprenant un corps massif 3, avantageusement en matériau thermique conducteur, possédant une paroi latérale périphérique 3a et une face frontale 3b. Il est entendu par corps massif tout corps pouvant remplir la fonction d'une enclume, c'est-à-dire tout corps pouvant subir un impact ou choc sans se déformer et servant de moyens de support à un objet subissant directement un choc ou impact ou devant exercer un choc ou un impact sur un autre objet. Le corps massif 3 se présente sous la forme générale d'un cylindre et est avantageusement réalisé en un matériau métallique.

Des moyens de solidarisation 4 sont prévus sur la face frontale 3b du corps massif 3 pour solidariser de façon amovible l'objet 2 en contact de conduction thermique avec le corps massif 3.

Le dispositif 1 de support du bloc 2 de matériau à tester comprend également un fourreau annulaire 36, de forme complémentaire au corps massif 3 dans lequel est logé le corps massif 3.

Des moyens de chauffage 5 de structure annulaire sont prévus de manière à entourer étroitement la paroi latérale périphérique du fourreau annulaire 36 en étant en contact de conduction thermique avec celui-ci. Les moyens de chauffage 5 comprennent au moins un organe 6 de chauffage électrique.

Des moyens d'assemblage 7 sont également prévus de manière à solidariser et à maintenir en contact de conduction thermique le corps massif 3 et le fourreau annulaire 36 avec les moyens de chauffage 5.

Les moyens de chauffage 5 comprennent un manchon tubulaire 8, avantageusement en matériau thermiquement conducteur, tel que de l'alumine, entourant le fourreau annulaire 36 et en contact de conduction thermique avec la paroi latérale périphérique du fourreau annulaire 36.

Afin de permettre un chauffage homogène sur l'ensemble du fourreau annulaire 36 et du corps massif 3, l'organe de chauffage électrique 6 est enroulé autour du manchon tubulaire 8, et plus précisément il est enroulé en hélice autour de la paroi externe 8a du manchon tubulaire 8.

De manière à permettre la mise en contact de conduction thermique entre l'organe de chauffage 6 et le manchon tubulaire 8, au moins une gouttière 9 est creusée dans la paroi externe 8a du manchon 8 autour de celle-ci et l'organe de chauffage 6 est abrité dans cette gouttière 9.

De manière préférentielle, l'organe de chauffage électrique 6 est un fil métallique, notamment un fil de platine.

Dans le cas de figure où le corps massif 3 est sensiblement cylindrique, alors le manchon tubulaire 8 est également cylindrique.

Afin de maintenir un contact étroit entre le corps massif 3 et le manchon tubulaire 8, le diamètre interne du manchon tubulaire 8 est sensiblement égal au diamètre externe du fourreau annulaire 36.

De manière alternative, il est possible de prévoir le corps massif 3 sous une forme parallélépipédique ou toute autre forme appropriée présentant des moyens de solidarisation 4 d'un objet à supporter et à chauffer, le manchon 8 étant apte à être en contact de conduction thermique avec le fourreau annulaire 36 de par sa forme complémentaire.

Avantageusement, quand le manchon tubulaire 8 est composé de plusieurs segments tubulaires, il est possible grâce à l'enroulement de l'organe de chauffage électrique 6 autour du manchon tubulaire 8 d'exercer une force de pression et de compression des segments du manchon 8 sur le corps massif 3, de manière à ainsi former un contact étroit entre le corps massif 3 et le manchon 8.

Les moyens d'assemblage 7 comprennent un cylindre 7a entourant étroitement les moyens de chauffage 5, à savoir le manchon tubulaire 8 et l'organe de chauffage électrique 6 et comprennent également des moyens 10 de retenue amovible de ce cylindre 7a.

De façon simple, les moyens 10 de retenue amovible peuvent comprendre au moins une tige de serrage 11 engagée dans au moins un passage traversant 12, notamment diamétralement, le corps massif 3, le fourreau annulaire 36, les moyens de chauffage 5 et le cylindre 7a.

Préférentiellement, le bloc 2 de matériau est sous la forme d'une palette apte à être maintenue sur le corps massif 3 à l'aide des moyens de solidarisation 4 comprenant deux profilés 13 en L inversé, disposés face à face en saillie sur la face frontale 3b du corps massif 3, sous lesquels le bloc 2 de matériau est inséré.

Afin de renforcer le blocage et la solidarisation du bloc 2 de matériau à tester, le support 1 de bloc 2 de matériau à rayer comprend des moyens de vissage 37 traversant axialement le corps 3 massif et aptes à exercer une force de placage sur le bloc 2 contre les moyens de solidarisation 4. Plus précisément, il est prévu une paire de tiges filetées 37 aptes à plaquer le bloc 2 contre les profilés 13, les tiges 37 étant respectivement aptes à être vissées dans une paire d'orifices taraudés 38 qui traversent axialement le corps massif 3.

La figure 2 illustre une vue en coupe d'un dispositif de support et de chauffage d'une pointe 16 d'un appareil indenteur 23 selon l'invention, les éléments identiques entre le dispositif de support et de chauffage d'un bloc 2 de matériau à tester et le dispositif de support et de chauffage d'une pointe d'un appareil indenteur 23 portant les mêmes numéros de référence.

Le dispositif de support et de chauffage 14 d'une pointe 16 d'un appareil indenteur 23 présente un corps massif 3, des moyens de chauffage 5 et des moyens d'assemblage 7, la principale différence portant sur les moyens de solidarisation 15 entre le bloc 2 de matériau à tester et le corps massif 3.

La pointe 16 est soit une pointe Vickers, soit une pointe Berkovitch, soit une pointe Knoop, soit une pointe sphérique, soit de forme conique ou pyramidale et est de type connu en soi, en saillie de la face frontale 3b du corps massif 3.

Les moyens de solidarisation 15 entre la pointe 16 et le corps massif 3 peuvent comprendre un évidement 17 pratiqué dans la face frontale 3b du corps massif 3 et un noyau 18 de forme extérieure complémentaire de celle de l'évidement 17.

Le noyau 18 comprend un passage traversant 19 de forme complémentaire de celle de la pointe 16 de manière que cette dernière soit reçue de manière ajustée dans ce passage 19 avec sa pointe 16a en saillie hors de la face frontale 3b du corps massif 3 et sa base 16b forcée en appui de conduction thermique contre le fond 17a de l'évidement 17.

Des moyens de blocage 20 de la pointe 16 dans le passage traversant 19 du noyau 18 sont également prévus et comprennent, selon un mode de réalisation préférentiel, une matière pulvérulente à faible granulométrie déposée dans le passage traversant 19 entre la pointe 16 et le noyau 18, mais également entre le noyau 18 et l'évidement 17. Il s'agit par exemple de ciment en poudre d'alumine.

De même, il est également prévu des moyens de blocage 21 entre le noyau 18 et l'évidement 17 du corps massif 3. Selon un mode de réalisation préférentiel, des moyens de filetage sont prévus sur le pourtour extérieur du noyau 18 et des moyens de taraudage sont prévus sur le pourtour intérieur de l'évidement 17. Ainsi, l'évidement 17 est taraudé et le noyau 18 est fileté et vissé dans l'évidement 17.

De plus, le fond 17a de l'évidement 17 comporte un doigt axial 22 intégral, sensiblement confondu avec l'axe central du corps massif 3, en saillie et de diamètre au plus égal à celui du passage traversant 19, la base 16b de la pointe 16 étant forcée en appui de conduction thermique contre la face frontale 22a du doigt 22.

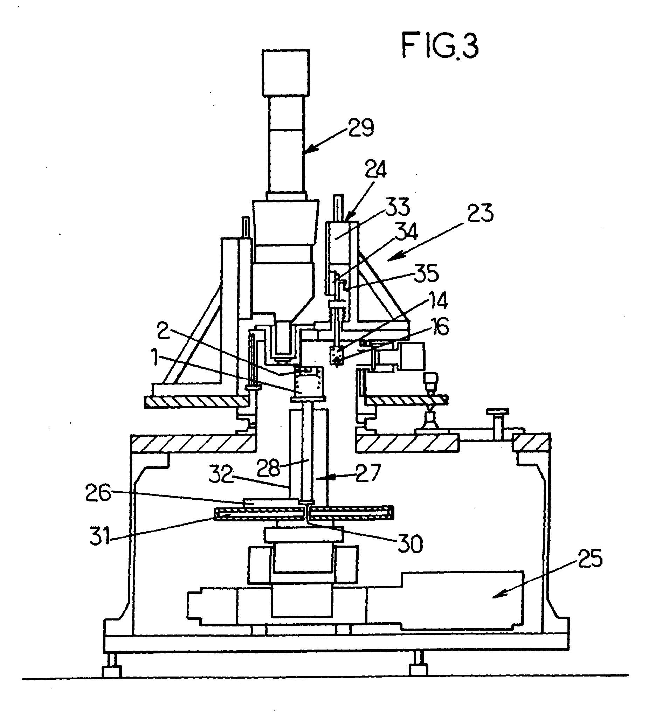

La figure 3 est une vue schématique d'un appareil indenteur 23 selon l'invention comprenant les dispositifs de support et de chauffage 14, 1 d'une pointe 16 et d'un bloc 2 de matériau à tester tels que précédemment décrits.

Le dispositif de support 14 de la pointe 16 est avantageusement placé face au dispositif de support 1 du bloc de matériau à tester de manière que la pointe 16 soit face au bloc 2 de matériau à tester qu'elle doit poinçonner ou rayer.

Plus précisément, la pointe 16 est située au dessus du bloc 2 de matériau à tester.

Afin de permettre l'indentation de la pointe 16 sur le bloc de matériau à tester, l'appareil indenteur 23 comprend des moyens de déplacement 24 du dispositif 14 de support et de chauffage de la pointe 16 ainsi que des moyens de support 25 du dispositif 1 de support et de chauffage d'un matériau à tester.

Afin de permettre la fixation du corps massif 3 soit sur les moyens de déplacement 24 du dispositif 14 de support et de chauffage de la pointe Vickers 16, soit sur les moyens support 25 du dispositif 1 de support et de chauffage d'un matériau à tester, il est prévu une tige 3d en saillie de la face dorsale 3c du corps massif 3 et avantageusement prévue sur l'axe central du corps massif 3.

La tige 3d en saillie présente préférentiellement une extrémité libre filetée de manière à pouvoir être vissée sur un élément support soit des moyens de déplacement 24, soit des moyens support 25.

Avantageusement, une goupille est prévue traversante à la fois dans l'extrémité libre filetée, mais également dans l'élément support soit des moyens de déplacement 24, soit des moyens support 25.

Le support de bloc 2 de matériau à rayer ou à poinçonner repose sur un capteur d'effort 26, de type connu en soi, par l'intermédiaire de moyens de liaison 27 sous la forme d'un élément tubulaire 28, préférentiellement en zircone.

La déformation du capteur d'effort 26 est mesurée en continu par un capteur de déplacement capacitif 30.

Le capteur d'effort 26 repose sur une pièce refroidie 31, tandis que l'élément tubulaire 28 traverse une autre pièce refroidie 32.

Préférentiellement, le capteur d'effort 26 est constitué d'un dispositif à pont de jauges.

L'appareil indenteur 23 comprend des moyens de visualisation 29 du support de bloc 2 de matériau à rayer ou à poinçonner, notamment aptes à suivre la dilatation dudit support de bloc 2 de matériau lors de son chauffage. En effet, pendant le chauffage, le dispositif de support et de chauffage du bloc 2 de matériau à tester se dilate. Ainsi, lorsque l'équilibre thermique est atteint et donc que la température est homogène au sein du dispositif de support du bloc 2, alors l'image obtenue par les moyens de visualisation 29 est stabilisée.

Le dispositif de support 14 de la pointe 16 est déplaçable verticalement à l'aide de moyens de déplacement 24.

Le support 1 du bloc 2 de matériau à tester est déplaçable horizontalement à l'aide de moyens de déplacement 25.

Préférentiellement, les moyens de déplacement vertical 24 du support 14 de pointe 16 comprennent une table de translation motorisée 33 et un translateur piézoélectrique 34, qui est lié à un capteur de déplacement 35, avantageusement un capteur de déplacement capacitif.

La présente invention porte également sur un procédé de mesure de l'effort exercé par une pointe 16 sur un bloc 2 de matériau à tester à l'aide d'un appareil indenteur 23.

Le procédé selon l'invention comprend une étape de mesure du déplacement de la pointe 16 dans le bloc 2 de matériau et dans le même temps une étape de mesure de l'effort exercé par la pointe 16 sur le bloc 2, ladite mesure de déplacement étant déterminée en retranchant la valeur mesurée par un premier capteur de déplacement 35 compris dans les moyens de déplacement 24 du support 14 de pointe 16 à la valeur mesurée par un second capteur de déplacement 30 mesurant la déformation du capteur d'effort 26 supportant le support 1 du bloc 2 de matériau à tester.

De manière préférentielle, il est formé une boucle d'asservissement en effort tant que la valeur calculée lors de ladite étape de mesure n'atteint pas une valeur de consigne fixée.

De plus, il est également prévu une étape de déplacement du translateur piézoélectrique 34 compris dans les moyens de déplacement 24 du support 14 de pointe 16 tant que la valeur calculée lors de ladite étape de mesure n'a pas atteint la valeur de consigne fixée.

Préférentiellement, la valeur du déplacement du translateur piézoélectrique 34 correspond à un pourcentage de la différence entre la valeur de consigne fixée et la valeur déterminée lors de ladite étape de mesure.

Ainsi, selon l'invention, il est possible de porter la pointe à une température déterminée, notamment à une température sensiblement égale à celle du bloc de matériau à tester de sorte que lors du test, lorsque la pointe est en contact du matériau à tester, il n'y a pas ou peu d'échange thermique entre eux. On est ainsi assuré que la température à l'emplacement du test est effectivement la température prévue.

Par ailleurs, afin de rendre homogène la température de régulation du dispositif de support et de chauffage du bloc 2 de matériau à tester et de la pointe 16, deux points froids (non représentés sur la figure, mais de tout type connu en soi) sont disposés à proximité de chacun des deux dispositifs 1, 14. Ainsi, la mesure de la température est indépendante pour chacun des deux dispositifs 1, 14 qui possède ainsi chacun sa propre régulation et son propre système de chauffage. Ces points froids servent de référence à la mesure de la température et donc à la dilatation propre de chacun des deux dispositifs 1, 14. Le contrôle de cette dilation est possible lorsqu'un équilibre thermique des deux dispositifs 1, 14 est atteint.

Des moyens de contrôle de la dilatation des fours sont intégrés sur chacun des dispositifs 1, 14.

En effet, puisque le dispositif de support et de chauffage du bloc 2 de matériau à tester repose sur un capteur d'effort 26, la charge détectée pendant le chauffage augmente par application de la loi de Laplace. Lorsque l'équilibre thermique est atteint, l'indication du capteur d'effort 26 est stabilisée.

Par ailleurs, la proximité immédiate du dispositif support du bloc 2 avec le dispositif support de la pointe 16 permet de créer l'échauffement ou le refroidissement de l'un par rapport à l'autre et de former un gradient de température entre les deux dispositifs 1, 14 qui créera une instabilité de régulation si l'un des deux dispositifs est à une température différente de l'autre.

Selon une forme particulière de réalisation de la boucle d'asservissement en effort, un fichier de points de consignes est préalablement créé. Chaque point de consigne est ensuite lu. La boucle d'asservissement consiste à retrouver, dans un intervalle de temps fixé, la valeur de la consigne. Pour cela, il est utilisé un algorithme de boucle par suite convergente. Il s'agit de mesurer l'écart entre la valeur souhaitée et la valeur mesurée. 50% de l'écart de force est converti en déplacement de la table piézoélectrique 34, pour faire avancer l'indenteur dans la matière, et donc augmenter l'effort. Cette méthode est réalisée cinq fois de suite pour tendre vers la valeur souhaitée. Ce type de régulation fonctionne car on utilise un moyen de mesure d'effort très déformable.

Le microscope 29 sert en particulier à viser une zone précise du bloc 2 de matériau à tester.

En bougeant les moyens de déplacement 25 d'une quantité connue, il est possible de tester une zone particulière du bloc de matériau à tester et de retrouver cette zone pour mesurer l'empreinte laissée par la pointe.

## Revendications

1. Appareil indenteur à pointe (16) propre à tester un bloc de matériau, comportant :
- un support (14) de pointe (16) agencé sous forme d'un dispositif (14) de support et de chauffage, notamment à très haute température, et
- un support (1) d'un bloc (2) d'un matériau à poinçonner ou rayer agencé sous forme d'un dispositif (1) de support et de chauffage, notamment à très haute température, ledit support (14) de pointe (16) et ledit support de bloc (2) comportant chacun :
- un corps (3) massif en matériau thermiquement conducteur, possédant une paroi (3a) latérale périphérique et une face (3b) frontale ;
- des moyens de solidarisation (4, 15) prévus sur ladite face (3b) frontale pour solidariser de façon amovible soit la pointe (16), soit le bloc (2) de matériau à poinçonner ou rayer, en contact de conduction thermique avec ledit corps (3) massif ;
- un fourreau annulaire (36) de forme complémentaire au corps massif (3) dans lequel est logé ledit corps massif (3) ;
- des moyens de chauffage (5) de structure annulaire propres à entourer étroitement la paroi latérale du fourreau annulaire (36) en étant en contact de conduction thermique avec celui-ci, lesdits moyens de chauffage (5) comprenant au moins un organe (6) de chauffage électrique, et
- des moyens d'assemblage (7) du corps (3) massif et des moyens de chauffage (5) ;
- ce grâce à quoi la pointe (16) peut être, au cours du test, portée à une température déterminée, notamment à une température sensiblement égale à celle du bloc (2) de matériau à tester.

2. Appareil indenteur selon la revendication 1, **caractérisé en ce que** les moyens de chauffage (5) comprennent un manchon (8) tubulaire en matériau thermiquement conducteur entourant le fourreau annulaire (36) et en contact de conduction thermique avec la paroi latérale périphérique de celui-ci et **en ce que** l'organe (6) de chauffage électrique est enroulé autour dudit manchon (8) tubulaire.

3. Appareil indenteur selon l'une quelconque des revendications 1 ou 2, **caractérisé en ce que** les moyens d'assemblage (7) comprennent un cylindre (7a) entourant étroitement les moyens de chauffage et des moyens (10) de retenue amovible de ce cylindre (7a).

4. Appareil indenteur selon l'une quelconque des revendications 1 à 3, **caractérisé en ce que** les moyens (4) de solidarisation de la pointe (16) comprennent :
- un évidement (17) pratiqué dans la face (3b) frontale du corps (3) massif,
- un noyau (18) de forme extérieure complémentaire de celle de l'évidement (17), ledit noyau (18) comportant un passage (19) traversant de forme complémentaire de celle de la pointe (16) de manière que cette dernière soit reçue de façon ajustée dans ce passage (19) avec son extrémité pointue en saillie hors de la face (3b) frontale du corps (3) massif et sa base (16b) forcée en appui de conduction thermique contre le fond (17a) de l'évidement (17),
- des moyens (20) de blocage de la pointe (16) dans ledit passage (19), et
- des moyens (21) de blocage dudit noyau (18) dans l'évidement (17).

5. Appareil indenteur selon la revendication 4, **caractérisé en ce que** le fond (17a) de l'évidement (17) comporte un doigt (22) axial intégral en saillie de diamètre au plus égal à celui du passage (19) et **en ce que** la base (16b) de la pointe (16) est forcée en appui de conduction thermique contre la face frontale (22a) dudit doigt (22).

6. Appareil indenteur selon l'une quelconque des revendications 4 ou 5, **caractérisé en ce que** les moyens de blocage (20) de la pointe (16) dans ledit passage (19) comprennent une matière pulvérulente à faible granulométrie déposée dans ledit passage (19) entre la pointe (16) et le noyau (18).

7. Appareil indenteur selon l'une quelconque des revendications 1 à 6, **caractérisé en ce que** ladite pointe est soit une pointe Vickers, soit une pointe Berkovitch, soit une pointe Knoop, soit une pointe sphérique.

8. Appareil indenteur selon l'une quelconque des revendications précédentes 1 à 7, **caractérisé en ce que** ledit support de bloc (2) de matériau à rayer ou à poinçonner repose sur un capteur d'effort (26).

9. Appareil indenteur selon la revendication 8, **caractérisé en ce que** la déformation dudit capteur d'effort (26) est mesurée en continu par un capteur de déplacement capacitif (30).

10. Appareil indenteur selon l'une quelconque des revendications précédentes, **caractérisé en ce que** ledit support (14) de pointe (16) est déplaçable verticalement à l'aide de moyens de déplacement (24).

11. Appareil indenteur selon l'une quelconque des revendications précédentes, **caractérisé en ce que** ledit support (1) du bloc (2) de matériau à tester est déplaçable horizontalement à l'aide de moyens de déplacement (25).

12. Appareil indenteur selon la revendication 10, **caractérisé en ce que** les moyens de déplacement vertical (24) du support (14) de pointe (16) comprennent une table de translation motorisée (33) et un translateur piézoélectrique (34), lié à un capteur de déplacement (35), avantageusement un capteur de déplacement capacitif.

13. Procédé de mesure de l'effort exercé par une pointe (16) sur un bloc (2) de matériau à tester à l'aide d'un appareil indenteur selon l'une des revendications précédentes, **caractérisé en ce qu'**il comprend une étape de chauffage de la pointe (16) à l'aide de moyens de chauffage (5) de manière à ce que la pointe (16) puisse être portée, au cours du test à une température déterminée, notamment à une température sensiblement égale à celle du bloc (2) de matériau à tester, une étape de mesure du déplacement de la pointe (16) dans le bloc (2) de matériau et, dans le même temps, une étape de mesure de l'effort exercé par la pointe (16) sur le bloc (2), ladite mesure de déplacement étant déterminée en retranchant la valeur mesurée par un premier capteur de déplacement (35) compris dans les moyens de déplacement (24) du support (14) de pointe (16) à la valeur mesurée par un second capteur de déplacement mesurant le déformation du capteur d'effort (26) supportant le support (1) du bloc (2) de matériau à tester.

14. Procédé de mesure de l'effort selon la revendication précédente, **caractérisé en ce qu'**il est formé une boucle d'asservissement en effort tant que la valeur calculée lors de ladite étape de mesure n'atteint pas une valeur de consigne fixée.

15. Procédé de mesure de l'effort selon la revendication 13 ou 14, **caractérisé en ce qu'**il comprend une étape de déplacement d'un translateur piézoélectrique (34) compris dans les moyens de déplacement (24) du support (14) de pointe (16) tant que la valeur calculée lors de ladite étape de mesure n'a pas atteint la valeur de consigne fixée.

## Claims

1. An indenting apparatus with a tip (16) suitable for testing a block of material, comprising:
- a holder (14) for the tip (16) arranged in the form of a holding and heating device (14), notably at very high temperature, and
- a holder (1) for a block (2) of a material to be punched or scratched arranged in the form of a holding and heating device (1), notably at very high temperature, said holder (14) for the tip (16) and said holder for a block (2) each comprising:
- a solid body (3) made of heat-conducting material, having a peripheral side wall (3a) and a transverse face (3b);
- securing means (4, 15) provided on said transverse face (3b) in order to secure in a removable manner either the tip (16), or the block (2) of material to be punched or scratched, in heat-conducting contact with said solid body (3);
- an annular sheath (36) of a shape to match the solid body (3) in which said solid body (3) is housed;
- heating means (5) of annular structure suitable for tightly surrounding the side wall of the annular sheath (36) and being in heat-conducting contact with the latter, said heating means (5) comprising at least one electric heating member (6), and
- means (7) for assembling the solid body (3) and the heating means (5);
- whereby the tip (16) may, during the test, be brought to a determined temperature, notably to a temperature substantially equal to that of the block (2) of material to be tested.

2. The indenting apparatus as claimed in claim 1, **characterized in that** the heating means (5) comprise a tubular sleeve (8) made of heat-conducting material surrounding the annular sheath (36) and in heat-conducting contact with the peripheral side wall of the latter and **in that** the electric heating member (6) is wound round said tubular sleeve (8).

3. The indenting apparatus as claimed in any one of claims 1 or 2, **characterized in that** the assembly means (7) comprise a cylinder (7a) tightly surrounding the heating means and removable means (10) for retaining this cylinder (7a).

4. The indenting apparatus as claimed in any one of claims 1 to 3, **characterized in that** the means (4) for securing the tip (16) comprise:
- a recess (17) made in the transverse face (3b) of the solid body (3),
- a core (18) with an outer shape that matches that of the recess (17), said core (18) comprising a through-passageway (19) with a shape to match that of the tip (16) so that the latter is received in an adjusted manner in this passageway (19) with its pointed end protruding outside the transverse face (3b) of the solid body (3) and its base (16b) forced into heat-conducting contact against the bottom (17a) of the recess (17),
- means (20) for immobilizing the tip (16) in said passageway (19), and
- means (21) for immobilizing said core (18) in the recess (17).

5. The indenting apparatus as claimed in claim 4, **characterized in that** the bottom (17a) of the recess (17) comprises a protruding integral axial finger (22) with a diameter at most equal to that of the passageway (19), and **in that** the base (16b) of the tip (16) is forced into heat-conducting contact against the transverse face (22a) of said finger (22).

6. The indenting apparatus as claimed in any one of claims 4 or 5, **characterized in that** the means (20) for immobilizing the tip (16) in said passageway (19) comprise a powdery material of small particle size placed in said passageway (19) between the tip (16) and the core (18).

7. The indenting apparatus as claimed in any one of claims 1 to 6, **characterized in that** said tip is either a Vickers tip, or a Berkovitch tip, or a Knoop tip, or a spherical tip.

8. The indenting apparatus as claimed in any one of the preceding claims 1 to 7, **characterized in that** said holder for the block (2) of material to be scratched or punched rests on a force sensor (26).

9. The indenting apparatus as claimed in claim 8, **characterized in that** the deformation of said force sensor (26) is measured continuously by a capacitive displacement sensor (30).

10. The indenting apparatus as claimed in any one of the preceding claims, **characterized in that** said holder (14) of the tip (16) can be moved vertically with the aid of displacement means (24).

11. The indenting apparatus as claimed in any one of the preceding claims, **characterized in that** said holder (1) of the block (2) of material to be tested can be moved horizontally with the aid of displacement means (25).

12. The indenting apparatus as claimed in claim 10, **characterized in that** the vertical displacement means (24) of the holder (14) of the tip (16) comprise a motorized translation table (33) and a piezoelectric translator (34), linked to a displacement sensor (35), advantageously a capacitive displacement sensor.

13. A method of measuring the force exerted by a tip (16) on a block (2) of material to be tested with the aid of an indenting apparatus as claimed in any one of the preceding claims, **characterized in that** it comprises a step of heating the tip (16) with the aid of heating means (5) so that the tip (16) can be brought, during the test, to a determined temperature, notably to a temperature substantially equal to that of the block (2) of material to be tested, a step of measuring the displacement of the tip (16) in the block (2) of material and, at the same time, a step of measuring the force exerted by the tip (16) on the block (2), said displacement measurement being determined by subtracting the value measured by a first displacement sensor (35) included in the means (24) for displacing the holder (14) of the tip (16) from the value measured by a second displacement sensor measuring the deformation of the force sensor (26) holding the holder (1) of the block (2) of material to be tested.

14. The method for measuring the force as claimed in the preceding claim, **characterized in that** a force feedback loop is formed so long as the value calculated during said measurement step does not reach a fixed setpoint value.

15. The method for measuring the force as claimed in claim 13 or 14, **characterized in that** it comprises a step of displacing a piezoelectric translator (34) included in the means (24) for displacing the holder (14) of the tip (16) so long as the value calculated during said measurement step has not reached the fixed setpoint value.

## Patentansprüche

1. Einkerbvorrichtung mit einer Spitze (16) zum Testen eines Materialblocks, mit:
- einer Unterstützung (14) der Spitze (16), die als Unterstützungs- und Heizeinrichtung (14) ausgebildet ist, insbesondere für sehr hohe Temperaturen, und
- einer Unterstützung (1) für einen zu stanzenden oder zu ritzenden Materialblock (2), die als Unterstützungs- und Heizeinrichtung ausgebildet ist, insbesondere für sehr hohe Temperaturen, wobei die Unterstützung (14) der Spitze (16) und die Unterstützung des Blocks (2) jeweils aufweisen:
- einen massiven Körper (3) aus thermisch leitfähigem Material, der eine seitliche Umfangswand (3a) und eine Stirnfläche (3b) aufweist;
- ein Verbindungsmittel (4, 15), das auf der Stirnfläche (3b) vorgesehen ist, um entweder die Spitze (16) oder den zu stanzenden oder zu ritzenden Materialblock (2) lösbar zu verbinden und zwar in thermisch leitendem Kontakt mit dem massiven Körper (3);
- eine ringförmige, zu dem massiven Körper (3) komplementär ausgebildete Aufnahme (36), in der der massive Körper (3) aufgenommen ist;
- ein ringförmig ausgebildetes Heizmittel (5), das geeignet sind, die seitliche Wand der ringförmigen Aufnahme (36) eng zu umgeben und zwar in thermisch leitendem Kontakt mit ihr, wobei das Heizmittel (5) mindestens eine elektrische Heizeinrichtung (6) aufweist und
- ein Montagemittel (7) für den massiven Körper (3) und das Heizmittel (5);
- wodurch die Spitze (16) während des Tests eine vorgesehene Temperatur aufweisen kann, insbesondere eine zu dem zu testenden Materialblock (2) in etwa gleiche Temperatur.

2. Einkerbvorrichtung gemäß Anspruch 1, **dadurch gekennzeichnet, dass** das Heizmittel (5) eine rohrförmige Muffe (8) aus einem thermisch leitfähigen Material aufweist, die die ringförmige Aufnahme (36) umgibt und mit ihrer seitlichen Umfangswand in thermisch leitendem Kontakt steht und dadurch, dass die elektrische Heizeinrichtung (6) um die rohrförmige Muffe (8) gewickelt ist.

3. Einkerbvorrichtung gemäß Anspruch 1 oder 2, **dadurch gekennzeichnet, dass** das Montagemittel (7) einen Zylinder (7a) aufweist, der das Heizmittel und ein lösbares Befestigungsmittel (10) für den Zylinder (7a) eng umgibt.

4. Einkerbvorrichtung gemäß einem der Ansprüche 1 bis 3, **dadurch gekennzeichnet, dass** das Verbindungsmittel (4) der Spitze (16) aufweist:
- eine Aussparung (17), die in die Stirnfläche (3b) des massiven Körpers (3) eingebracht ist,
- einen Kern (18) mit einer äußeren, zur Aussparung (17) komplementären Form, wobei der Kern (18) einen zur Spitze (16) komplementären Durchgang (19) aufweist, sodass diese auf justierte Weise in dem Durchgang (19) aufgenommen ist, mit ihrem spitzen Ende aus der Stirnfläche (3b) des massiven Körpers (3) hervortritt und ihre Basis (16b) thermisch leitend gegen den Boden (17a) der Aussparung (17) gedrückt wird,
- ein Blockiermittel (20) der Spitze (16) in dem Durchgang (19) und
- ein Blockiermittel (21) des Kerns (18) in der Aussparung (17).

5. Einkerbvorrichtung gemäß Anspruch 4, **dadurch gekennzeichnet, dass** der Boden (17a) der Aussparung (17) einen axialen integralen hervorstehenden Zapfen (22) aufweist, der höchstens den Durchmesser des Durchgangs (19) aufweist und dadurch, dass die Basis (16b) der Spitze (16) thermisch leitend gegen die Stirnfläche (22a) des Zapfens (22) gedrückt wird.

6. Einkerbvorrichtung gemäß Anspruch 4 oder 5, **dadurch gekennzeichnet, dass** das Blockiermittel (20) der Spitze (16) in dem Durchgang (19) einen pulverförmigen Stoff kleiner Korngröße aufweist, der in dem Durchgang (19) zwischen der Spitze (16) und dem Kern (18) angeordnet ist.

7. Einkerbvorrichtung gemäß einem der Ansprüche 1 bis 6, **dadurch gekennzeichnet, dass** die Spitze entweder eine Vickers-Spitze, eine Berkovitch-Spitze, eine Knoop-Spitze oder eine kugelförmige Spitze ist.

8. Einkerbvorrichtung gemäß einem der Ansprüche 1 bis 7, **dadurch gekennzeichnet, dass** die Unterstützung des zu stanzenden oder zu ritzenden Materialblocks (2) auf einem Belastungsmessaufnehmer angeordnet ist.

9. Einkerbvorrichtung gemäß Anspruch 8, **dadurch gekennzeichnet, dass** die Verformung des Belastungsmessaufnehmers (26) kontinuierlich mit einem kapazitivem Wegaufnehmer (30) gemessen wird.

10. Einkerbvorrichtung gemäß einem der vorstehenden Ansprüche, **dadurch gekennzeichnet, dass** die Unterstützung (14) der Spitze (16) vertikal über ein Verschiebungsmittel (24) verschiebbar ist.

11. Einkerbvorrichtung gemäß einem der vorstehenden Ansprüche, **dadurch gekennzeichnet, dass** die Unterstützung (1) des Blocks (2) des zu testenden Materials horizontal über ein Verschiebungsmittel (25) verschiebbar ist.

12. Einkerbvorrichtung gemäß Anspruch 10, **dadurch gekennzeichnet, dass** die vertikalen Verschiebungsmittel (24) der Unterstützung (14) der Spitze (16) einen motorisierten Vorschubtisch (33) und einen piezoelektrischen Vorschub (34) aufweisen und zwar nahe einem Wegaufnehmer (35), bevorzugt einem kapazitiven Wegaufnehmer.

13. Messverfahren für eine über eine Spitze (16) auf einen Block (2) zu testenden Materials ausgeübte Belastung mit Hilfe einer Einkerbvorrichtung gemäß einem der vorstehenden Ansprüche, **dadurch gekennzeichnet, dass** es einen Heizschritt der Spitze (16) mit Hilfe des Heizmittels (5) umfasst, so dass die Spitze (16) während des Tests eine vorgesehene Temperatur aufweisen kann, insbesondere eine in etwa dem Block (2) des zu testenden Materials entsprechende Temperatur, einen Messschritt der Verschiebung der Spitze (16) in dem Materialblock (2) und gleichzeitig einen Messschritt für die über eine Spitze (16) auf den Block (2) ausgeübte Belastung, wobei die gemessene Verschiebung durch Abziehen des gemessenen Werts eines ersten in dem Verschiebungsmittel (24) der Unterstützung (14) der Spitze (16) angeordneten Wegaufnehmers (35) von dem gemessenen Wert eines zweiten Wegaufnehmers bestimmt wird, der die Verschiebung des Belastungsmessaufnehmers (26), der die Unterstützung (1) des Blocks (2) des zu testenden Materials unterstützt, misst.

14. Messverfahren für eine Belastung gemäß Anspruch 13, **dadurch gekennzeichnet, dass** es als Regelungsschleife ausgebildet ist, die arbeitet, solange der berechnete Wert des Messschritts nicht den festgelegten Sollwert erreicht hat.

15. Messverfahren für eine Belastung gemäß Anspruch 13 oder 14, **dadurch gekennzeichnet, dass** es einen Verschiebungsschritt eines in dem Verschiebungsmittel (24) der Unterstützung (14) der Spitze (16) enthaltenen piezoelektrischen Vorschubs (34) umfasst, solange der berechnete Wert des Messschritts nicht den festgelegten Sollwert erreicht hat.
